(19) Europäisches Patentamt
European Patent Office
Office européen des brevets

(11) **EP 3 321 589 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(51) Int Cl.:
***F23R 3/14*** *(2006.01)*

(21) Anmeldenummer: **17200868.2**

(22) Anmeldetag: **09.11.2017**

(54) **TREIBSTOFFDÜSE EINER GASTURBINE MIT DRALLERZEUGER**

FUEL NOZZLE OF A GAS TURBINE WITH SWIRL CREATOR

BUSE DE CARBURANT D'UNE TURBINE À GAZ DOTÉE DU GÉNÉRATEUR DE TOURBILLONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2016 DE 102016222097**

(43) Veröffentlichungstag der Anmeldung:
**16.05.2018 Patentblatt 2018/20**

(73) Patentinhaber: **Rolls-Royce Deutschland Ltd & Co KG**
**15827 Blankenfelde-Mahlow (DE)**

(72) Erfinder:
• **DÖRR, Dr.-Ing. Thomas**
**12167 Berlin (DE)**
• **CLEMEN, Dr.-Ing. Carsten**
**15749 Mittenwalde (DE)**

(74) Vertreter: **Hoefer & Partner Patentanwälte mbB**
**Pilgersheimer Straße 20**
**81543 München (DE)**

(56) Entgegenhaltungen:
**DE-A1-102008 044 448      DE-A1-102014 204 468**
**US-A- 5 394 688      US-A1- 2010 308 135**

**Beschreibung**

Die Erfindung bezieht sich auf eine mit einem Drallerzeuger versehene Treibstoffdüse einer Gasturbine.

Aus dem Stand der Technik ist es bekannt, Treibstoffdüsen im Bereich einer Kopfplatte einer Brennkammer einer Gasturbine anzuordnen, um zum einen Treibstoff einzuspritzen und um zum anderen die Möglichkeit einer Lufteinleitung in den Innenraum der Brennkammer zu schaffen. Im Rahmen der Erfindung werden unter dem Begriff Gasturbine sowohl Fluggasturbinen-Triebwerke als auch stationäre Gasturbinen verstanden. Bei einer Ringbrennkammer sind um den Umfang verteilt mehrere Treibstoffdüsen vorgesehen, welche jeweils an ihrem Ausströmbereich von einem Drallerzeuger umgeben sind. Der Drallerzeuger ist ringartig ausgebildet und weist üblicherweise zwei Ringkanäle auf, durch welche Luft in den Brennraum der Brennkammer zugeführt wird. In jedem Ringkanal sind um den Umfang verteilt Luftleitelemente vorgesehen, welche zu einer Verdrallung der einströmenden Luft führen. Bei zwei Ringkanälen erfolgt die Verdrallung mit unterschiedlichen Verdrallungswinkeln.

Die Luftleitelemente sind blechartig oder als konturierte Schaufeln ausgestaltet und verringern oder limitieren die jeweilige Luftmenge, welche durch den Ringkanal strömen kann, durch die verblockende Wirkung durch ihre radiale Ausdehnung über die Kanalhöhe und ihre Dicke. Bei einer vorgegebenen radialen Höhe des jeweiligen Ringkanals, welche maßgeblich durch den Außendurchmesser der Treibstoffdüse und/oder den Innendurchmesser der Brennerdichtung vorgegeben wird, ist somit die effektive Strömungsfläche des Ringkanals konstruktiv vorgegeben. Dies wiederum führt zu der Limitierung der Luftmenge, welche der Brennkammer zugeführt werden kann. Um zusätzliche Luft in die Brennkammer einzuleiten, ergibt sich nach den aus dem Stand der Technik vorbekannten Konstruktionen nur die Möglichkeit, den Drallerzeuger und/oder den Hauptkörper der Treibstoffdüse radial zu vergrößern. Dies führt zum einen zu einem größeren benötigten Bauraum und bedingt andererseits ein höheres Gesamtgewicht. Somit ist die Treibstoffdüse mit ihrem Drallerzeuger nicht sehr flexibel einsetzbar, wenn, bspw. zur Vermeidung von Rußemissionen, größere Luftmengen in den Brennraum eingeleitet werden sollen.

Zum Stand der Technik wird auf die US 6,883,332 B2, die US 2002/0162335 A1, die US 6,547,163 B1 oder die US 6,560,964 B2 verwiesen. Weiterhin zeigt die US 2010/0308135 A1 eine Treibstoffdüse gemäß dem Oberbegriff des Anspruchs 1. Weiter zeigt die US 5,394,688 A eine Treibstoffdüse mit innerem und äußerem Luftzufuhrkanal.

Der Erfindung liegt die Aufgabe zugrunde, eine mit einem Drallerzeuger versehene Treibstoffdüse zu schaffen, welche bei einfachem Aufbau und einfacher, kostengünstiger Herstellbarkeit die Zuführung einer größeren Luftmenge in die Brennkammer ermöglichen.

Erfindungsgemäß wird die Aufgabe durch die Merkmalskombinationen des unabhängigen Anspruchs 1 gelöst, die Unteransprüche zeigen weitere vorteilhafte Ausgestaltungen der Erfindung.

Hinsichtlich des Drallerzeugers der Treibstoffdüse ist erfindungsgemäß somit vorgesehen, dass dieser ein äußeres und ein inneres Ringelement umfasst, wobei die beiden Ringelemente konzentrisch zueinander angeordnet sind. Zwischen dem inneren Ringelement und dem äußeren Ringelement ist ein äußerer Ringkanal gebildet. Entsprechend wird bei an der Treibstoffdüse montiertem Drallerzeuger zwischen dem Hauptkörper der Treibstoffdüse und dem inneren Ringelement ein innerer Ringkanal definiert. Erfindungsgemäß ist vorgesehen, dass zumindest einer der Ringkanäle an seinem Einströmbereich eine radiale Höhe aufweist, welche größer ist, als eine radiale Höhe eines mittleren Bereichs des Ringkanals. Erfindungsgemäß sind die Luftleitelemente zur Erzeugung des Dralls in dem Einströmbereich mit der größeren radialen Höhe vorgesehen. Bei geeigneter Dimensionierung und Auswahl der jeweiligen radialen Höhen des äußeren bzw. des inneren Ringkanals ergibt sich somit im Einströmbereich eine erheblich vergrößerte Strömungsfläche des Ringkanals, sodass trotz der im Einströmbereich angeordneten Luftleitelemente eine wesentlich größere Luftmenge zuströmen kann. Es ist erfindungsgemäß dabei nicht erforderlich, die Treibstoffdüse selbst zu verändern. Vielmehr kann mit der Erfindung bei einer vorhandenen Treibstoffdüse durch die Ausgestaltung des Drallerzeugers eine Erhöhung der Luftvolumina erreicht werden. Alternativ hierzu ist es möglich, eine im Durchmesser kleinere Treibstoffdüse bei gleichbleibenden Außenabmessungen des Drallerzeugers zu verwenden, um eine höhere Luftmenge in die Brennkammer zu leiten. Bei der letzteren Variante ist es möglich, das Gesamtgewicht der Treibstoffdüsen und des zugehörigen Drallerzeugers erheblich zu verringern. Bei beiden Varianten ist es möglich, die doppelte Luftmenge oder mehr, verglichen mit dem Stand der Technik, zuzuführen.

Es ist weiterhin vorgesehen, dass der Querschnitt des äußeren Ringkanals sich vom Einströmbereich zum Ausströmbereich verjüngt. Der Ringkanal ist somit düsenartig aufgebaut. Gleiches gilt für den inneren Ringkanal, welcher zwischen dem Hauptkörper der Treibstoffdüse und dem radial inneren Ringelement definiert wird.

Durch die erfindungsgemäße Lösung ist es möglich, die Anzahl der Luftleitelemente in den Ringkanälen, welche zur Verdrallung der zuströmenden Luft führen, in gleicher Anzahl beizubehalten, wie bei dem jeweils zugrunde liegenden Stand der Technik. Somit kann eine ausreichende Verdrallung der Luft bei gesteigerter Gesamt-Luftmenge erreicht werden.

Zur Verdeutlichung der Erfindung ist nochmals darauf hinzuweisen, dass die effektive Strömungsfläche im Einströmbereich des äußeren bzw. des inneren Ringkanals erfindungsgemäß größer ist, als die effektive Strömungsfläche in einem axial mittleren Bereich des jeweiligen Ringkanals. Es versteht sich, dass bei Ringkanälen, welche, wie oben erwähnt, über ihre axiale Länge verjüngt ausgebildet sind, die sich ergebenden Unterschiede zur effektiven Strömungsfläche im Einströmbereich zu einem jeweiligen Querschnittsbereich variieren kann. Zur Verdeutlichung der Erfindung wird deshalb auf einen axial mittleren Bereich Bezug genommen. Dabei ist festzuhalten, dass sich die Begriffe axial und radial jeweils auf eine Mittelachse der Treibstoffdüse bzw. des Hauptkörpers der Treibstoffdüse beziehen.

Um den erfindungsgemäßen Drallerzeuger bzw. die mit dem Drallerzeuger ausgerüstete Treibstoffdüse in eine bestehende Brennkammerkonstruktion einzupassen, ist das äußere Ringelement stromauf der Kopfplatte und/oder der Brennerdichtung mit einem größeren Außendurchmesser zu versehen, als der Innendurchmesser der Brennerdichtung. Hierdurch ist es möglich, sowohl den Drallerzeuger selbst als auch die mit dem Drallerzeuger versehene Treibstoffdüse in üblicher Weise von der Seite des Brennkammerkopfes aus in die Brennerdichtung einzuführen und an der Kopfplatte zu lagern. Konstruktive Änderungen des Gesamtaufbaus der zu verwendenden Brennkammer sind somit nicht erforderlich. In entsprechender Weise kann selbstverständlich der Außendurchmesser des Einströmbereichs des inneren Ringelements, welches den inneren Ringkanal ausbildet, stromauf der Kopfplatte ebenfalls im Durchmesser vergrößert werden.

Die Verjüngung der Ringkanäle kann erfindungsgemäß entweder kontinuierlich verlaufen, es ist jedoch auch eine stufenartige Querschnittsveränderung möglich. Weiterhin können die Wandungen der Ringkanäle erfindungsgemäß kreisbogenartig oder ellipsenartig hinsichtlich ihres Querschnitts ausgebildet sein, wodurch sich torusartige Wandverläufe der Ringkanäle ergeben, die zu der erwähnten Querschnittsverjüngung und damit Reduzierung der Durchströmungsfläche zwischen dem Einströmbereich und einem mittleren Bereich führen.

Weiterhin ist es erfindungsgemäß möglich, die Einströmbereiche der Ringkanäle in Axialrichtung anzuordnen oder in einem Winkel zur Axialrichtung auszurichten. Es ist auch möglich, die Einströmbereiche und die sich damit ergebenden Öffnungen in Radialrichtung auszurichten.

Im Folgenden wird die Erfindung anhand von Ausführungsbeispielen in Verbindung mit der Zeichnung beschrieben. Dabei zeigt:

Fig. 1    ein Gasturbinentriebwerk zur Verwendung der Erfindung,

Fig. 2    eine vereinfachte Schnittansicht einer Treibstoffdüse mit Drallerzeuger gemäß dem Stand der Technik,

Fig. 3    eine vergrößerte Darstellung der Ansicht der Fig. 2 gemäß dem Stand der Technik,

Fig. 4    eine Schnittansicht, analog Fig. 3, eines ersten Ausführungsbeispiels der Erfindung,

Fig. 5    eine Schnittansicht, analog Fig. 4, eines weiteren Ausführungsbeispiels der Erfindung,

Fig. 6    eine Schnittansicht, analog den Figuren 4 und 5, eines dritten Ausführungsbeispiels der Erfindung, und

Fig. 7    eine Schnittansicht eines weiteren Ausführungsbeispiels analog der Darstellung der Figuren 4 bis 6.

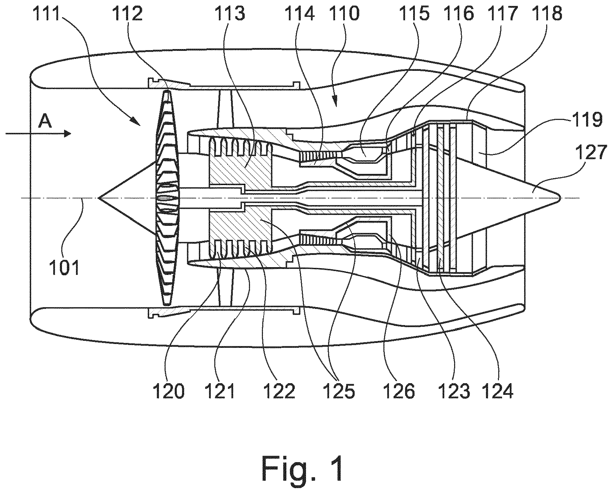

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

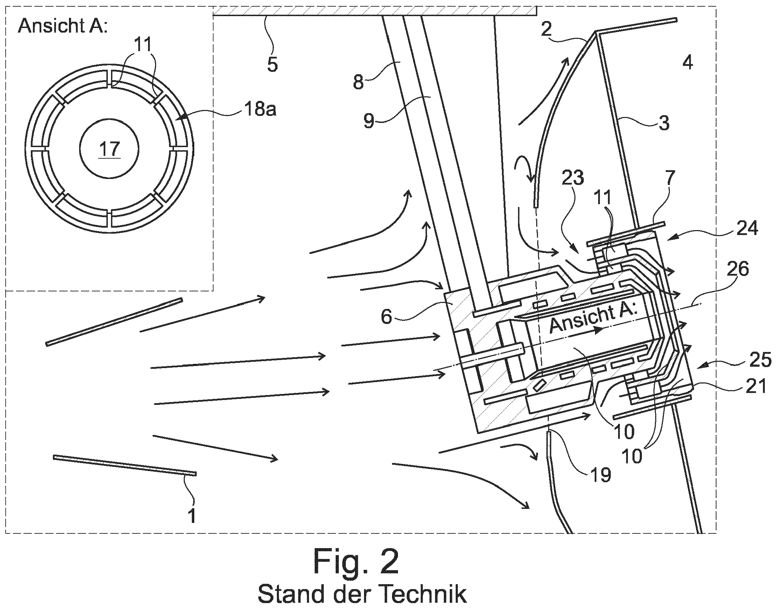

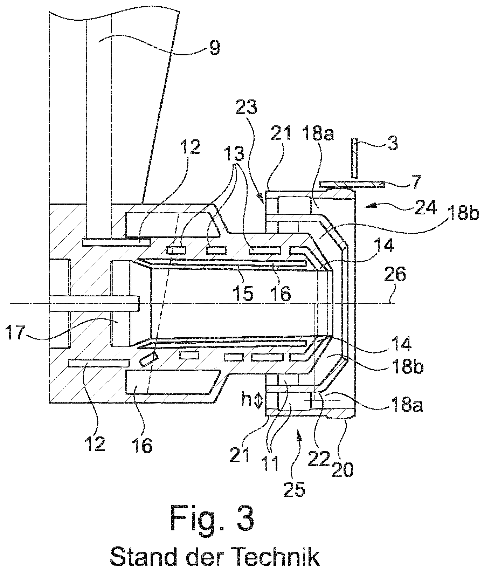

Die Figuren 2 und 3 zeigen Konstruktionen gemäß dem Stand der Technik, aus denen sich der zugrunde liegende Aufbau einer Treibstoffdüse sowie eines zugeordneten Drallerzeugers ergibt. Die Darstellungen sind jeweils in einer Axialschnittebene gezeigt, welche eine Mittelachse 26 einer Treibstoffdüse 6 bzw. eines Hauptkörpers der Treibstoffdüse umfasst. Zusätzlich zeigt die Figur eine vereinfachte Ansicht A gemäß Figur 2.

Die Figuren 2 und 3 zeigen somit in der Schnittansicht eine 3-Strom-Treibstoffdüse 6 gemäß dem Stand der Technik. Diese Konstruktion ergibt sich aus den eingangs genannten Druckschriften. Die Figuren 2 und 3 verdeutlichen weiterhin die Anordnung der Treibstoffdüse 6 in einer Brennkammer 115 der Gasturbine. Die Brennkammer weist in üblicher Bauart einen Brennkammerkopf 2 auf, welcher mit einer jeweiligen Öffnung versehen ist, durch welche die Treibstoffdüse 6 montiert ist und welche so bemessen ist, dass ein Luftstrom 19 durch den Brennkammerkopf einströmen kann.

In der schematischen Darstellung der Figur 2 ist ein Brennraum 4 gezeigt, welcher durch eine Kopfplatte 3 stirnseitig begrenzt wird. An der Kopfplatte 3 ist eine Brennerdichtung 7 ausgebildet.

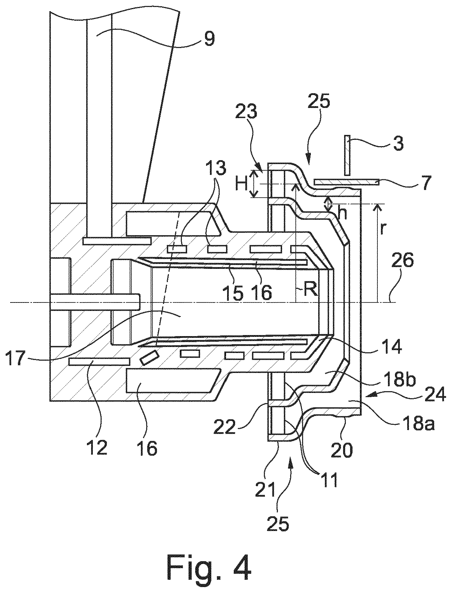

Die zugeführte Luft strömt aus einem nicht dargestellten Hochdruckverdichter durch einen Diffusor 1 in Richtung des Brennkammerkopfes 2 und nachfolgend, wie erwähnt, durch eine Ausnehmung des Brennkammerkopfes als Luftstrom 19 in den Zwischenbereich zwischen dem Brennkammerkopf 2 und der Kopfplatte 3. Der Hauptkörper der Treibstoffdüse 6 ist mit einem zentrischen Luftkanal 17 (sh. Figuren 4 bis 7) versehen, durch welchen ein Teil des Gesamtluftvolumens in den Brennraum 4 geleitet wird. Die Treibstoffdüse 6 ist an einem Außengehäuse 5 befestigt und ragt durch die Brennerdichtung 7 in den Brennraum 4. Die erwähnte Brennerdichtung 7 führt zu einer Abdichtung zwischen der Kopfplatte 3 und dem Drallerzeuger 25, welcher den Hauptkörper der Treibstoffdüse 6 umgibt.

Die Treibstoffdüse 6 weist einen Schaft 8 auf, durch welchen eine Treibstoffzuführung 9 erfolgt. Der Treibstoff wird durch die Zuleitung 9 in eine Umfangskammer 12 geleitet und strömt nachfolgend durch Treibstoffkanäle 13 zu einer Einspritzdüse 14. Zur Abschirmung des Treibstoffs von der Luft weist die Treibstoffdüse innere Hitzeschilder 15 und/oder Isolationskammern 16 auf. Wie in Figur 3 dargestellt, erfolgt die Abdichtung zwischen dem Drallerzeuger 25 und der Brennerdichtung 7 durch zumindest ein Dichtelement 20, welches in Form einer Ringwulst ausgebildet sein kann.

Während in Figur 2 die drei Luftkanäle 10 der Drei-Strom-Treibstoffdüse mit gleichem Bezugszeichen versehen sind, verdeutlicht die Figur 3, dass zusätzlich zu dem zentrischen Luftkanal 17 durch den Drallerzeuger 25 zwei weitere zueinander konzentrische Ringkanäle ausgebildet werden, nämlich ein äußerer Ringkanal 18a und ein innerer Ringkanal 18b. Diese Ringkanäle 18a und 18b werden durch ein äußeres Ringelement 21 und inneres Ringelement 22 definiert.

Die Figur 3 zeigt, dass im Einströmbereich 23 der Ringkanäle 18a und 18b jeweils Luftleitelemente 11 angeordnet sind. Diese sind gleichmäßig um den Umfang verteilt, so wie sich dies aus der Ansicht A der Figur 2 ergibt. Zur Verdeutlichung der Erfindung ist in der schematischen Darstellung der Ansicht A von Figur 2 nur der äußere Ringkanal 18a mit den darin angeordneten Luftleitelementen 11 dargestellt.

Bezugnehmend auf Figur 3 ergibt sich, dass eine radiale Höhe h des äußeren Ringkanals sich im Wesentlichen über die gesamte axiale Länge des äußeren Ringkanals 18a erstreckt, sodass die wirksame Durchströmungsfläche sich durch die radiale Höhe h abzüglich der Querschnittsflächen der Luftleitelemente 11 ergibt, so wie dies in Ansicht A von Figur 2 verdeutlicht ist. Die Luftleitelemente 11 haben jeweils eine Dicke D und eine Anzahl N und erstrecken sich über die gesamte Höhe h des äußeren Ringkanals 18a. Somit blockieren die Luftleitelemente 11 den freien Querschnitt des äußeren Ringkanals 18a und führen zu einer verringerten Luftmenge, welche durch den Ringkanal strömen kann. Analoges gilt für den inneren Ringkanal 18b mit den dort angeordneten Luftleitelementen 11, sh. Figur 3.

Wie in Figur 3 weiterhin dargestellt, verlaufen die Luftkanäle 18a und 18b in axialer Richtung, wobei der Verlauf der Ringkanäle zylindrisch ist. Der engste Querschnitt der jeweiligen Ringkanäle ergibt sich somit im Bereich der Luftleitelemente (Drallelemente) 11.

Um bei der aus dem Stand der Technik bekannten Konstruktion einen höheren Luftstrom zu erreichen, ist es erforderlich, die effektive Strömungsfläche durch die Ringkanäle 18a, 18b zu vergrößern. Dies kann bspw. durch eine Verringerung der Dicke der Luftleitelemente, durch eine Änderung des aufgeprägten Dralls der Luftleitelemente oder durch eine Verringerung der Anzahl der Luftleitelemente erfolgen. Derartige konstruktive Änderungen sind jedoch vielfach nicht möglich oder wünschenswert und bedingen zudem weitere konstruktive Änderungen der Brennkammer selbst.

Die Durchströmfläche erweitert sich bei den aus dem Stand der Technik bekannten Konstruktionen stromab der Luftleitelemente 11, da diese den freien Querschnitt nicht mehr stören. Es tritt somit eine Diffusorwirkung ein, welche die Luftströmung verlangsamt.

Die Durchströmfläche der Ringkanäle 18a, 18b durch die Leitelemente lässt sich wie folgt bestimmen:

Höhe des Ringkanals 18a, 18b im Bereich der Leitelemente 11: h

Mittlerer Radius des jeweiligen Ringkanals: r

Anzahl der Leitelemente: N

Maximale Dicke des Leitelements 11: D

Kreiszahl $\pi$

Damit ergibt sich eine durchströmbare Fläche a:

$$a = 2 \times \pi \times r \times h - N \times h \times D$$

Die Figuren 4 bis 7 zeigen jeweils Ausführungsbeispiele der Erfindung, wobei die Darstellung jeweils analog Figur 3 erfolgt. Gleiche Teile sind jeweils mit gleichen Bezugszeichen versehen.

Wie in den Figuren 4 bis 7 dargestellt, ergibt sich der engste Querschnitt des äußeren Ringkanals 18a bzw. des inneren Ringkanals 18b durch die radiale Höhe h des jeweiligen Ringkanals. Zum besseren Verständnis wird in den Figuren 4 bis 7 jeweils auf den äußeren Ringkanal 18a Bezug genommen. Erfindungsgemäß sind die Luftleitelemente 11 jedoch, im Unterschied zum Stand der Technik, stromauf dieses engsten Querschnitts h angeordnet und werden mit einer größeren radialen Höhe H des jeweiligen Ringkanals kombiniert. Dabei wird die Kanalhöhe H als Vielfaches X der Kanalhöhe h so gewählt, dass sich die effektive Strömungsfläche A im Bereich der Luftleitelemente 11 größer darstellt, als die Durchströmfläche, welche aus der Kanalhöhe h und dem mittleren Radius r im Bereich der Kanalhöhe h definiert ist. Die Durchströmfläche a im Einströmbereich 23 ergibt sich somit durch die dort angeordneten Luftleitelemente 11, aus dem dort vorliegenden Radius R (mittlerer Radius im Bereich der Luftleitelemente 11), der radialen Kanalhöhe H und der durch die Luftleitelemente 11 verblockten Fläche, welche die Anzahl, die Dicke und die Höhe der Luftleitelemente 11 berücksichtigt:

$$A = 2 \times \pi \times R \times H - N \times H \times D.$$

Durch die erfindungsgemäße Lösung sind die Ringkanäle so dimensionierbar, dass sich eine signifikante Steigerung der durchzuführenden Luftmenge beispielsweise um bis zu 100 % ergibt.

Um einen im Durchmesser vergrößerten Einströmbereich 23 zu realisieren, ist es erforderlich, die beiden Ringkanäle 18a und 18b in geeigneter Weise zu dimensionieren. Dies erfolgt dadurch, dass der Außendurchmesser des Drallerzeugers 25 stromauf der Kopfplatte 3 vergrößert wird, um dort die Kanalhöhe H zu realisieren. Die Form des äußeren Ringkanals 18a und des inneren Ringkanals 18b wird erfindungsgemäß so gewählt, dass sich der jeweilige Ringkanal von der Kanalhöhe H aus von der Hinterkante des Luftleitelements 11 bis zur engsten Kanalhöhe h verjüngt. Dies wird durch entsprechende Ausgestaltungen des äußeren Ringelements 21 und des inneren Ringelements 22 erreicht.

Die Ausführungsbeispiele der Figuren 4 bis 7 unterscheiden sich hinsichtlich der Ausgestaltung und des Verlaufs der jeweiligen Ringkanäle 18a und 18b bzw. der Form der Ringelemente 21 und 22.

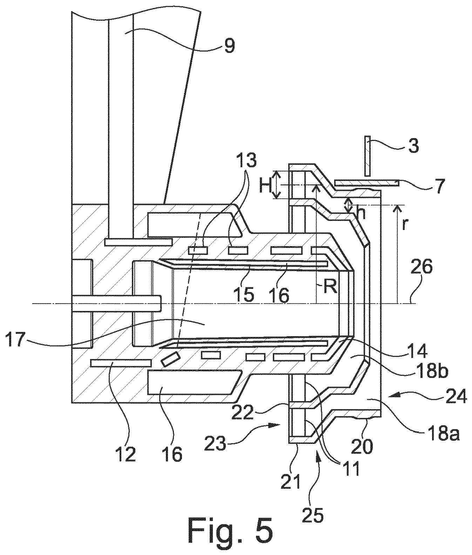

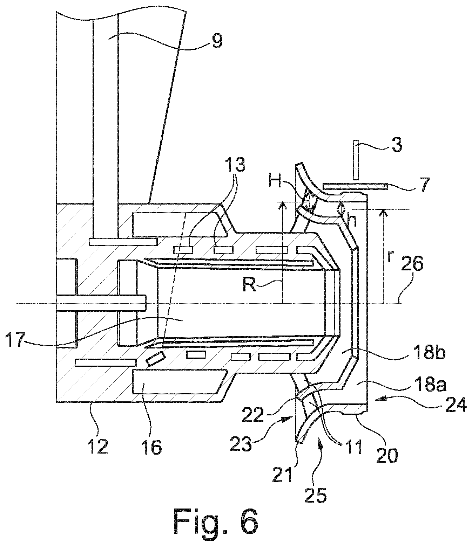

Bei dem Ausführungsbeispiel gemäß Figur 4 ergibt sich eine Ausgestaltung des Einströmbereichs 23 in achsparalleler Anordnung, sodass beide Ringkanäle 18a und 18b mit den dort im jeweiligen Einströmbereich 23 vorgesehenen Luftleitelementen 11 in Axialrichtung angeordnet sind. Ein jeweiliger Ausströmbereich 24 ist in üblicher Weise dimensioniert, um die verdrallte Luftströmung an die Luftströmung durch den zentrischen Luftkanal 17 sowie den aus der Einspritzdüse 14 austretenden Treibstoffstrahl anzupassen. Dies ist aus dem Stand der Technik bekannt und braucht an dieser Stelle nicht weiter beschrieben werden. Gemäß Figur 4 erfolgt ein Übergang zwischen den einzelnen Querschnittsbereichen mit einer im Wesentlichen abgerundeten Form. Die Figur 5 zeigt ein Ausführungsbeispiel, bei welchem jeweils geradlinige, bezogen auf die Schnittansicht der Figur 5, Wandungsbereiche der Ringelemente 21 und 22 vorgesehen sind, sodass sich eine stufenweise Reduzierung der Querschnittsfläche ergibt. Bei dem Ausführungsbeispiel der Figur 6 ist der Einströmbereich 23 in einem Winkel zur Mittelachse 26 angeordnet, die Wandungen sind mit einem kreisbogenartigen oder ellipsenartigen Querschnittsbereich versehen.

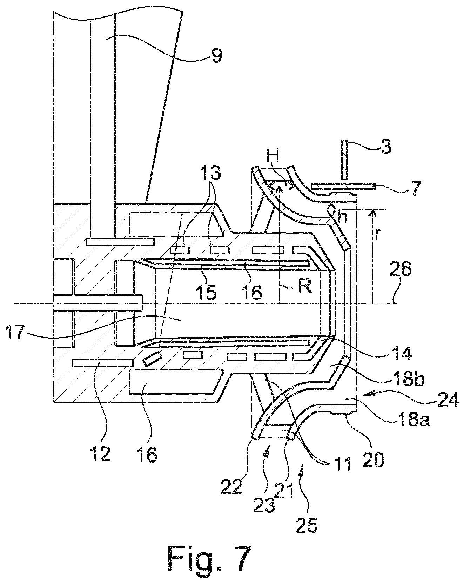

Bei dem Ausführungsbeispiel der Figur 7 ist der Einströmbereich 23 des äußeren Ringkanals 18a in radialer Richtung positioniert.

Wie sich aus einem Vergleich der Figuren 3 bis 7 ergibt, ist die axiale Baulänge des Drallerzeugers 25 bzw. der Treibstoffdüse 6 gegenüber dem Stand der Technik erfindungsgemäß gleich, sodass keine baulichen Veränderungen der Brennkammer, insbesondere des Brennkammerkopfes 2 erforderlich sind.

Ein Vergleich insbesondere der Figuren 4 bis 7 mit der Figur 3 ergibt die erfindungsgemäße Erhöhung der Durchströmungsfläche im Bereich der Luftleitelemente. Zur Berechnung der effektiven Strömungsfläche A wird für den nachfolgenden Vergleich der mittlere Radius R an der Hinterkante des Leitelements 11 berücksichtigt, ebenso die radiale Kanalhöhe H an der Hinterkante des Leitelements und die maximale Dicke D des Leitelements. Für den nachfolgenden Vergleich wird die Durchströmfläche A im Bereich der Leitelemente 11 jeweils mit einem CD-Faktor von 0,8 multipliziert:

Stand der Technik: Kanalhöhe H = 2 mm, Radius r = 13,75 mm, Fläche A = 173 mm$^2$ abzüglich der Luftleitelemente 11:

Beispielsweise 40 Luftleitelemente mit jeweils 1 mm Dicke

CD = 0,8

Effektive Fläche a = 74 mm$^2$

Dem gegenüber ergibt sich bei der Erfindung Folgendes:

Kanalhöhe H = 4 mm, Radius R = 15 mm, Fläche = 377 mm$^2$

abzüglich der Luftleitelemente:

Beispielsweise 40 Luftleitelemente mit jeweils 1 mm Dicke

CD = 0,8

Effektive Fläche A = 174 mm$^2$

Effektive Fläche a = 173 mm$^2$

Daraus ergibt sich, dass bei dem gewählten Beispiel mehr als eine Verdoppelung der effektiven Strömungsfläche erfolgt. Insgesamt ergibt sich erfindungsgemäß somit eine erhöhte effektive Fläche der beiden äußeren Ringkanäle 18a und 18b. Hierdurch wird die Möglichkeit geschaffen, entweder eine größere Luftmenge bei gleichem Außendurchmesser der Treibstoffdüse 6 durchzuführen, um auf diese Weise Emissionen positiv zu beeinflussen oder die gleiche Fläche bei einem kleineren Durchmesser der Treibstoffdüse 6 zu realisieren, um das Gesamtgewicht der Treibstoffdüse zu reduzieren.

**Bezugszeichenliste**

| | |
|---|---|
| 1 | Diffusor |
| 2 | Brennkammerkopf |
| 3 | Kopfplatte |
| 4 | Brennraum |
| 5 | Außengehäuse |
| 6 | Treibstoffdüse/Hauptkörper |
| 7 | Brennerdichtung |
| 8 | Schaft |
| 9 | Treibstoffzuführung |
| 10 | Luftkanal |
| 11 | Luftleitelement |
| 12 | Umfangskammer |
| 13 | Treibstoffkanal |
| 14 | Einspritzdüse |
| 15 | Hitzeschild |
| 16 | Isolationskammer |
| 17 | zentrischer Luftkanal |
| 18a | äußerer Ringkanal |
| 18b | innerer Ringkanal |
| 19 | Luftstrom |
| 20 | Dichtelement |
| 21 | äußeres Ringelement |
| 22 | inneres Ringelement |
| 23 | Einströmbereich |
| 24 | Ausströmbereich |
| 25 | Drallerzeuger |
| 26 | Mittelachse |
| 101 | Triebwerksmittelachse |
| 110 | Gasturbinentriebwerk / Kerntriebwerk |
| 111 | Lufteinlass |
| 112 | Fan |
| 113 | Mitteldruckkompressor (Verdichter) |
| 114 | Hochdruckkompressor |
| 115 | Brennkammer |
| 116 | Hochdruckturbine |
| 117 | Mitteldruckturbine |
| 118 | Niederdruckturbine |
| 119 | Abgasdüse |
| 120 | Leitschaufeln |
| 121 | Kerntriebwerksgehäuse |
| 122 | Kompressorlaufschaufeln |
| 123 | Leitschaufeln |
| 124 | Turbinenschaufeln |
| 125 | Kompressortrommel oder -scheibe |
| 126 | Turbinenrotornabe |
| 127 | Auslasskonus |

**Patentansprüche**

1. Treibstoffdüse für eine Gasturbine mit einem Drallerzeuger (25), einer Kopfplatte (3) und einer Brennerdichtung (7), wobei die Treibstoffdüse einen rohrartigen, mit Treibstoffkanälen (13) versehenen Hauptkörper (6) besitzt, welcher an seinem Ausströmbereich (24) in dem Drallerzeuger (25) angeordnet ist, wobei der Drallerzeuger (25) in der an der Kopfplatte (3) angeordneten Brennerdichtung (7) angeordnet ist, und der Drallerzeuger ein inneres (22) und ein äußeres (21) Ringelement aufweist, wobei die Ringelemente (21, 22) konzentrisch zueinander angeordnet sind und zwischen dem inneren Ringelement (22) und dem äußeren Ringelement (21) ein äußerer Ringkanal (18a) ausgebildet ist, welcher in seinem axialen mittleren Bereich eine radiale Höhe von h aufweist, wobei der äußere Ringkanal (18a) an seinem Einströmbereich (23) eine radiale Höhe von H aufweist und in dem Einströmbereich (23) mit Luftleitelementen (11) versehen ist, wobei an der radial inneren Seite des inneren Ringelements (22) ein innerer Ringkanal (18b) ausgebildet ist, dessen mit Luftleitelementen (11) versehener Einströmbereich (23) eine größere radiale Höhe aufweist, als ein mittlerer Bereich des inneren Ringkanals (18b), und der Querschnitt des äußeren Ringkanals (18a) sich zwischen einem Einströmbereich (23) und einem Ausströmbereich (24) verjüngt, **dadurch gekennzeichnet, dass** H > h ist, der äußere Ringkanal (18a) im Bereich der Leitelemente (11) eine effektive Strömungsfläche (A) aufweist, welche größer ist, als die effektive Strömungsfläche im axialen mittleren Bereich des äußeren Ringkanals (18a) ohne Luftleitelemente (11), und wobei das äußere Ringelement (21) stromauf der Kopfplatte (3) und/oder der Brennerdichtung (7) einen größeren Außendurchmesser aufweist, als der Innendurchmesser der Brennerdichtung (7).

2. Treibstoffdüse nach Anspruch 1, **dadurch gekennzeichnet, dass** der innere Ringkanal (18b) zwischen dem Hauptkörper (6) und dem inneren Ringelement (22) ausgebildet ist und in seinem Einströmbereich (23) eine radiale Höhe von H aufweist, wobei H > h, mit h als radiale Höhe eines axial mittleren Bereichs des inneren Ringkanals (18b).

3. Treibstoffdüse nach einem der Ansprüche 1 oder 2, **dadurch gekennzeichnet, dass** sich die Ringkanäle (18a, 18b) von ihrem Einströmbereich (23) zu ihrem Ausströmbereich (24) verjüngen, wobei die Verjüngung kontinuierlich, stufenartig oder mit einer kreisbogenartigen oder ellipsenartigen Krümmung erfolgt.

4. Treibstoffdüse nach einem der Ansprüche 1 bis 3, **dadurch gekennzeichnet, dass** die Einströmbereiche (23) in Axialrichtung, in einem Winkel zur Axialrichtung oder in Radialrichtung angeordnet sind.

## Claims

1. Fuel nozzle for a gas turbine having a swirl generator (25), a head plate (3) and a burner seal (7), the fuel nozzle having a tubular main body (6) which is provided with fuel ducts (13) and is arranged at its outflow region (24) in the swirl generator (25), the swirl generator (25) being arranged in the burner seal (7) which is arranged on the head plate (3), and the swirl generator having an inner (22) and an outer (21) ring element, the ring elements (21, 22) being arranged concentrically with respect to one another, and an outer ring duct (18a) being configured between the inner ring element (22) and the outer ring element (21), which outer ring duct (18a) has a radial height of h in its axial middle region, the outer ring duct (18a) having a radial height of H at its inflow region (23) and being provided with air guiding elements (11) in the inflow region (23), an inner ring duct (18b) being configured on the radially inner side of the inner ring element (22), the inflow region (23) of which inner ring duct (18b), which is provided with air guiding elements (11), has a greater radial height than a middle region of the inner ring duct (18b), and the cross section of the outer ring duct (18a) tapering between an inflow region (23) and an outflow region (24), **characterized in that** H > h, and, in the region of the guiding elements (11), the outer ring duct (18a) has an effective flow area (A) which is greater than the effective flow area in the axial middle region of the outer ring duct (18a) without air guiding elements (11), and the outer ring element (21) having a greater external diameter upstream of the head plate (3) and/or the burner seal (7) than the internal diameter of the burner seal (7).

2. Fuel nozzle according to Claim 1, **characterized in that** the inner ring duct (18b) is configured between the main body (6) and the inner ring element (22) and, in its inflow region (23), has a radial height of H, wherein H > h, with h being the radial height of an axially middle region of the inner ring duct (18b).

3. Fuel nozzle according to either of Claims 1 and 2, **characterized in that** the ring ducts (18a, 18b) taper from their inflow region (23) to their outflow region (24), the tapering taking place continuously, in a step-like manner or with an arcuate or ellipsoid curvature.

4. Fuel nozzle according to one of Claims 1 to 3, **characterized in that** the inflow regions (23) are arranged in the axial direction, at an angle with respect to the axial direction, or in the radial direction.

## Revendications

1. Buse à carburant pour une turbine à gaz comprenant un générateur de tourbillon (25), une plaque de tête (3) et un joint de brûleur (7), la buse à carburant présentant un corps principal (6) de type tubulaire, pourvu de canaux de carburant (13), qui est disposé au niveau de sa région de sortie (24) dans le générateur de tourbillon (25), le générateur de tourbillon (25) étant disposé dans le joint de brûleur (7) disposé au niveau de la plaque de tête (3) et le générateur de tourbillon présentant un élément annulaire intérieur (22) et un élément annulaire extérieur (21), les éléments annulaires (21, 22) étant disposés concentriquement l'un par rapport à l'autre et un canal annulaire extérieur (18a) étant réalisé entre l'élément annulaire intérieur (22) et l'élément annulaire extérieur (21), lequel présente, dans sa région centrale axiale, une hauteur radiale h, le canal annulaire extérieur (18a) présentant, au niveau de sa région d'afflux (23), une hauteur radiale H et étant pourvu, dans la région d'afflux (23), d'éléments de guidage d'air (11), un canal annulaire intérieur (18b) étant réalisé au niveau du côté radialement interne de l'élément annulaire intérieur (22), dont la région d'afflux (23) pourvue d'éléments de guidage d'air (11) présente une plus grande hauteur radiale qu'une région centrale du canal annulaire intérieur (18b), et la section transversale du canal annulaire extérieur (18a) se rétrécissant entre une région d'afflux (23) et une région de sortie (24), **caractérisée en ce que** H > h, le canal annulaire extérieur (18a) présente, dans la région des éléments de guidage (11), une surface d'écoulement effective (A) qui est supérieure à la surface d'écoulement effective dans la région centrale axiale du canal annulaire extérieur (18a) sans éléments de guidage d'air (11), et l'élément annulaire extérieur (21) présentant en amont de la plaque de tête (3) et/ou du joint de brûleur (7), un diamètre extérieur supérieur au diamètre intérieur du joint de brûleur (7).

2.  Buse à carburant selon la revendication 1, **caractérisée en ce que** le canal annulaire intérieur (18b) est réalisé entre le corps principal (6) et l'élément annulaire intérieur (22) et présente, dans sa région d'afflux (23), une hauteur radiale H, où H > h, h étant la hauteur radiale d'une région centrale axiale du canal annulaire intérieur (18b).

3.  Buse à carburant selon l'une quelconque des revendications 1 et 2, **caractérisée en ce que** les canaux annulaire (18a, 18b) se rétrécissent depuis leur région d'afflux (23) jusqu'à la région de sortie (4), le rétrécissement s'effectuant de manière continue, étagée ou avec une courbure de type arc de cercle ou ellipse.

4.  Buse à carburant selon l'une quelconque des revendications 1 à 3, **caractérisée en ce que** les régions d'afflux (23) sont disposées dans la direction axiale, suivant un angle par rapport à la direction axiale, ou dans la direction radiale.

Fig. 1

Fig. 2
Stand der Technik

# Fig. 3
## Stand der Technik

Fig. 4

EP 3 321 589 B1

Fig. 5

13

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6883332 B2
- US 20020162335 A1
- US 6547163 B1
- US 6560964 B2
- US 20100308135 A1
- US 5394688 A